Europäisches Patentamt

European Patent Office

Office européen des brevets

(19)

(11) Publication number: **0 303 898 B1**

(12) **EUROPEAN PATENT SPECIFICATION**

(45) Date of publication of patent specification: **28.10.92**  (51) Int. Cl.⁵: **H04N 9/31, G09G 3/36**

(21) Application number: **88112659.3**

(22) Date of filing: **03.08.88**

(54) **Projection-type color display device.**

(30) Priority: **18.08.87 JP 204768/87**
**28.04.88 JP 106072/88**

(43) Date of publication of application:
**22.02.89 Bulletin 89/08**

(45) Publication of the grant of the patent:
**28.10.92 Bulletin 92/44**

(84) Designated Contracting States:
**DE FR GB NL**

(56) References cited:
**EP-A- 0 258 927**
**WO-A-86/00485**
**GB-A- 2 191 057**

(73) Proprietor: **SEIKO EPSON CORPORATION**
**4-1, Nishishinjuku 2-chome**
**Shinjuku-ku Tokyo-to(JP)**

(72) Inventor: **Aruga, Shuji**
**c/o Seiko Epson Corporation 3-5, Owa**
**3-chome**
**Suwa-shi Nagano-ken(JP)**

(74) Representative: **Blumbach Weser Bergen**
**Kramer Zwirner Hoffmann Patentanwälte**
**Radeckestrasse 43**
**W-8000 München 60(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a projection-type color display device utilizing liquid crystal light valves as image forming elements.

There are several versions of projection-type color display devices employing liquid crystal light valves. For example, documents JP-A-179723/85 and JP-A-35481/86 disclose display devices in which liquid crystal light valves having a matrix arrangement of picture elements are used to form red, green and blue images by controlling a red light beam, a green light beam and a blue light beam, respectively. The color images or color light beams formed by the liquid crystal light valves are then optically synthesized and projected onto a screen to form an enlarged image. The color images are generally synthesized by means of an optical system including dichroic mirrors. Color synthesis by means of a dichroic mirror system is suitable for a compact projection-type color display device since its optical system is extremely simple.

In the above prior art, the picture quality of the projected image is deteriorated due to the existence of both, colored light entering the projection lens system after having been reflected an even number of times during light synthesis by the dichroic mirror system and colored light entering the projection lens system after having been reflected an odd number of times.

One reason for the deteriorated picture quality results from the fact that the feature of photoelectricity of a light valve depends on the angle of incidence of the light entering the light valve. Because of this dependence on the angle of incidence, the intensity distribution of the colored light is becomes asymmetric. Therefore, the intensity distribution of those color components in the projected image that have been reflected an odd number of times is different from the intensity distribution of color components that have been reflected an even number of times. This difference in the intensity distribution results in an irregular color of the projected synthesized image and the color reproducibility is deteriorated.

If the light entered into the liquid crystal light valves were completely collimated light and entered the liquid crystal light valve surface perpendicularly, the above mentioned disanvantages would not occur. However, it is practically impossible to obtain completely collimated light, and some components of the incident light inevitably enter the liquid crystal light valve surface at an angle with respect to the normal to the surface, resulting in the above explained disadvantages. If diffused light enters the liquid crystal light valve, the disadvantages, that is irregular color and deterioration of color reproducibility, are even more remarkable.

The above problems are caused by an asymmetric light intensity distribution of the images formed by the liquid crystal light valves. Due to the switching elements of the liquid crystal light valve and a light shield layer shielding the switching elements against light, the effective area of each picture element has an asymmetric shape. Since a corresponding asymmetric shape of the individual color images is projected after having been reflected an odd number of times and an even number of times, respectively, with each reflection effecting a lateral inversion, the projected picture elements of the color image(s) having been reflected an odd number of times are not fully coincident with the projected picture elements of the color image(s) having been reflected an even number of times. As a result, the picture plane appears rough and irregular color is produced within each picture element area reducing the color reproducibilty.

It is an object of the present invention to overcome the above stated problems and to provide a projection-type color display device having an excellent color reproducibility without irregular color in the projected image even if a dichroic mirror system for color synthesis is utilized.

This object is achieved with a projection-type color display device as claimed.

According to the invention, a liquid crystal light valve used for forming a colored image guided to the optical projection system through an even number of reflections is made different from a liquid crystal light valve used for forming a colored image guided to the optical projection system through an odd number of reflections in such a way that an optical feature of the one has a mirror inverted symmetry with respect to the optical feature of the other. The optical feature is the liquid crystal aligning distribution and/or the unit pattern of the light shield layer or the arrangement of switching elements. The form of the unit pattern of the light shield layer can be made axially symmetric with respect to the center axis in the vertical direction of the unit pattern.

Ways of carrying out the invention are described in detail below with reference to the drawings which illustrate only specific embodiments and in which:

Fig. 1
is a schematic perspective view of a liquid crystal light valve;
Figs.2 and 3
show a liquid crystal aligning distribution;
Fig. 4
shows an optical construction of a projection-type color display device;
Fig. 5

shows a luminous intensity distribution after image formation;

Fig. 6

shows a luminous intensity distribution of the projected image;

Fig. 7

shows an optical construction of the projection-type color display device according to another embodiment;

Fig. 8

is a cross-sectional view of a liquid crystal light valve;

Figs.9 and 10

show unit patterns of a light shield layer of a liquid crystal light valve;

Fig. 11

shows an optical construction of a projection-type color display device according to still another embodiment;

Fig. 12

shows a unit pattern of the light shield layer; and

Figs. 13(a) and 13(b)

show unit patterns of the light shield layer.

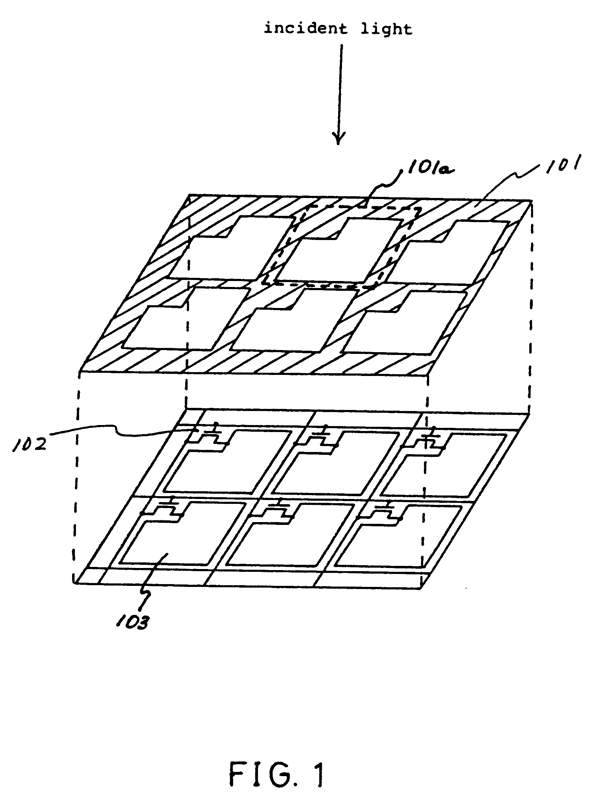

A first embodiment of the present invention of the present invention will be described below in connection, with Figs. 1 to 6.

An active matrix liquid crystal panel is utilized as a liquid crystal light valve. Thin film transistors 102 are arranged in a matrix on a transparent substrate. A light shield layer 101 is arranged on another substrate facing the former for shielding the light except for the effective picture element area. An aligning layer is formed on each of the substrates and subjected to a rubbing treatment. The substrates are combined to a liquid crystal light valve with a liquid crystal material therebetween. As thin film transistors forming the switching elements of the active matrix, polysilicon transistors, amorphous silicon transistors and semiconductor compound transistors are usable. Further, a switching method like those using MIM elements with the properties of a diode, ring diode elements, back-to-back diodes or a simple multiplexing method are also usable in the present invention.

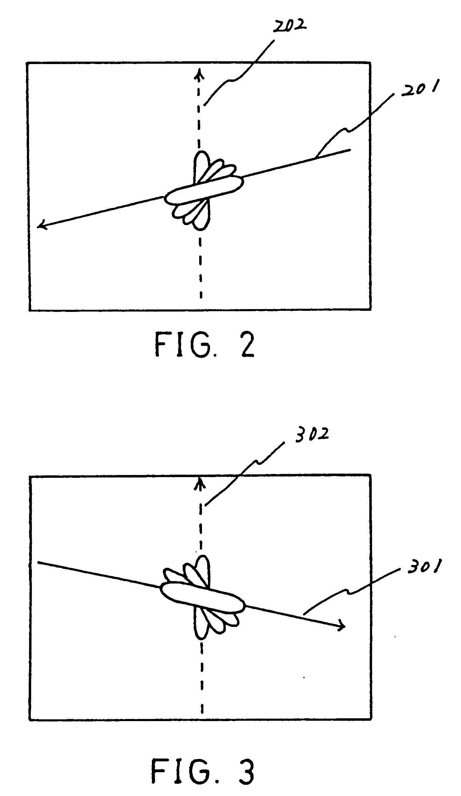

The use of two different types of liquid crystal light valves having symmetric aligning distributions with respect to each other is an essential characteristic of this embodiment of the invention. "Symmetric aligning distributions" means that the aligning distribution of one of the liquid crystal light valves is mirror-inverted with respect to the aligning distribution of the other liquid crystal light valve as will be explained below. The symmetric aligning distributions are obtained by controlling the direction of rubbing treatment for aligning of the upper and lower substrates. The one type of liquid crystal light valves has its thin film transistor carrying substrate rubbed in the direction indicated by arrow 201 in Fig. 2 and the other substrate in the direction indicated by arrow 202. The thin film transistor carrying substrate of the other type of liquid crystal light valves is rubbed in the direction indicated by arrow 301 in Fig. 3 and the substrate opposite thereto in the direction indicated by arrow 302. The crossing angle of the aligning axes of the upper and lower substrates is 80° for both types. When the liquid crystal light valves or panels are filled with a nematic liquid crystal, the one type becomes a twisted nematic (TN) liquid crystal light valve having a twist in the clockwise direction whereas the other type becomes a TN liquid crystal light valve having a twist in the counterclockwise direction. When an optical activator is added to the nematic liquid crystal, such aligning distributions are maintained more stably or liquid crystal light valves having a twist angle of 90° or more can be obtained. For instance, an optical activator with the property to rotate clockwise and another one with a property to rotate counterclockwise can be utilized for the above mentioned first type and second type of liquid crystal light valves, respectively.

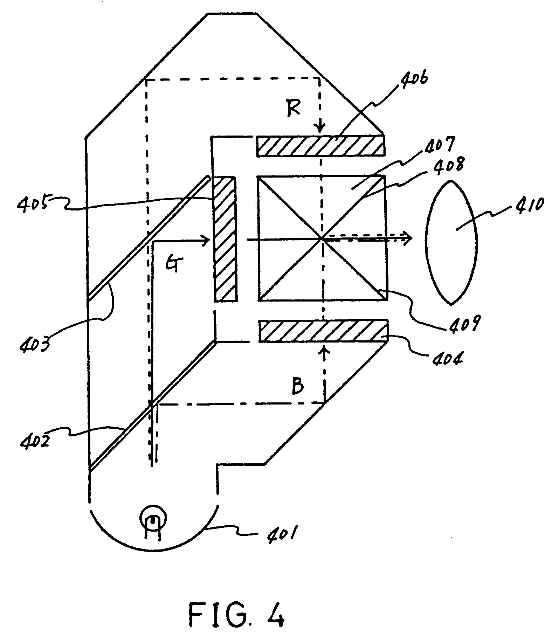

The projection-type color display device using the above explained liquid crystal light valves is optically constructed as shown in Fig. 4. The light emitted from a light source 401 is segregated into a red light beam, a green light beam and a blue light beam by means of a blue light reflection dichroic mirror 402 and a green light reflection dichroic mirror 403. The red light beam enters a red light liquid crystal light valve 406, the green light beam a green light liquid crystal light valve 405 and the blue light beam a blue light liquid crystal light valve 404. The color images formed by the liquid crystal light valves 404, 405 and 406 are synthesized by a dichroic mirror prism 407 and projected by means of a projection lens 410 onto a screen (not shown). Dichroic mirror prism 407 consists of four rectangular prisms bonded to each other and forming a red light reflection dichroic mirror surface 408 and a blue light reflection dichroic mirror surface 409. During color synthesis by said dichroic mirror prism 407 the red image and the blue image are each reflected once while the green image is transmitted without being reflected, and the synthesized image is then guided to the projection lens. The liquid crystal light valves for the red and the blue light beams have an aligning distribution according to Fig. 2 and the liquid crystal light valve for the green light beam has an aligning distribution according to Fig. 3, i.e. mirror-inverted with respect to that of Fig. 2. Instead, the aligning distribution of the liquid crystal light valves for the red and the blue light beams could be that corresponding to Fig. 3 and the aligning distribution of the liquid crystal light valve for the green light beam that of Fig. 2. For achieving the object of the present invention, only the mirror-inverted symmetric relation is important.

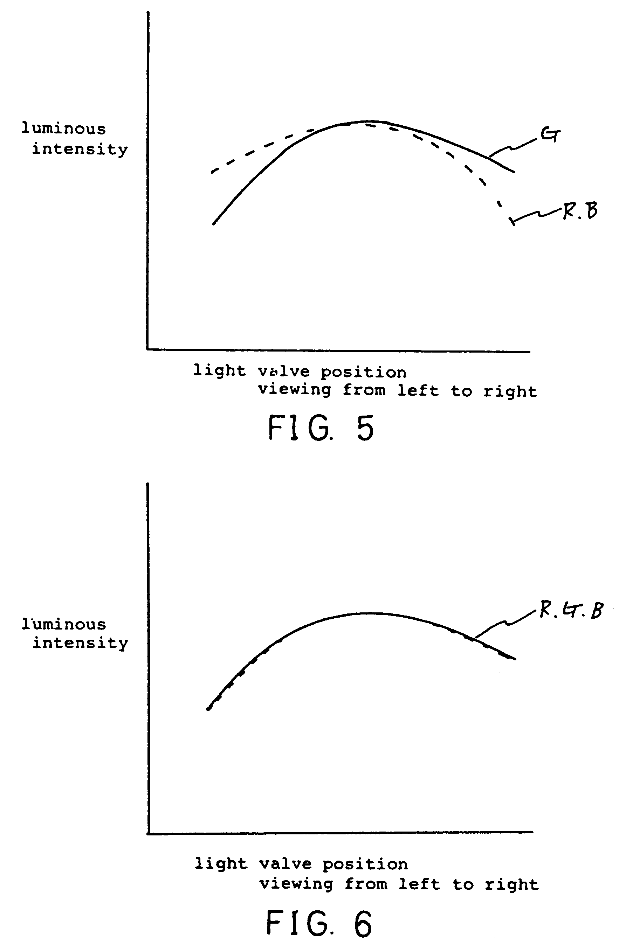

Wenn the luminous intensity distributions are examined, that of the red and the blue images on the one hand and that of the green image on the other hand are symmetric with respect to the center of the picture as shown in Fig. 5. Since the luminous intensity distributions of the red and the blue images are laterally inverted due to the reflection in the dichroic mirror prism 407, there is no difference between the luminous intensity distributions of the individual color picture components in the synthesized picture as shown in Fig. 6. Accordingly, no specific colored light is displayed more intensively in the picture than others, resulting in no irregular color and an improved color reproducibility.

In the above embodiment, during color synthesis the red and the blue light (picture) are each reflected once while the green light (picture) does not undergo any reflection. It will be appreciated that one reflection is only an example of any odd number of reflections, whereas no reflection is an example of any even number of reflections.

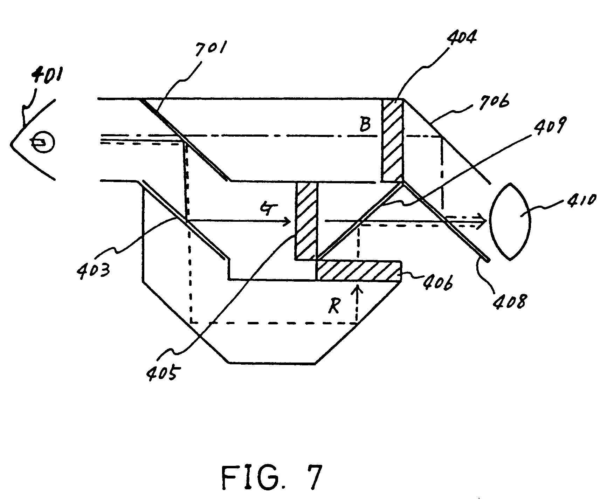

A second embodiment of the present invention will next be described with reference to Fig. 7. The second embodiment uses the same two types of liquid crystal light valves as the first embodiment.

In Fig. 7, the light emitted from the light source 401 is segregated into a red, a green and a blue light beam by means of a yellow light reflection dichroic mirror 701 and a green light reflection dichroic mirror 403. The red, green and blue light beams enter a red liquid crystal light valve 406, a green liquid crystal light valve 405 and a blue liquid crystal light valve 404, respectively. According to the optical construction of the projection-type color display device of this embodiment, during color synthesis, the red image formed by the red light liquid crystal light valve 406 is reflected once by the red light reflection dichroic mirror surface 409. The green image formed by the green light liquid crystal light valve 405 is transmitted without any reflection. The blue image formed by the blue light liquid crystal light valve 404 is reflected twice by a mirror 706 and the blue light reflection dichroic mirror surface 408. The synthesized image is guided to projection lens 410. For the blue light liquid crystal light valve 404 and the green light liquid crystal light valve 405, the type having a TN liquid crystal twisted clockwise according to Fig. 2 is used, whereas for the red light liquid crystal light valve 406 the other type of liquid crystal light valves having a TN liquid crystal twisted counterclockwise according to Fig. 3 is used. Thus, in this embodiment, a projected image without irregular color and excellent in color reproducibilty can also be obtained.

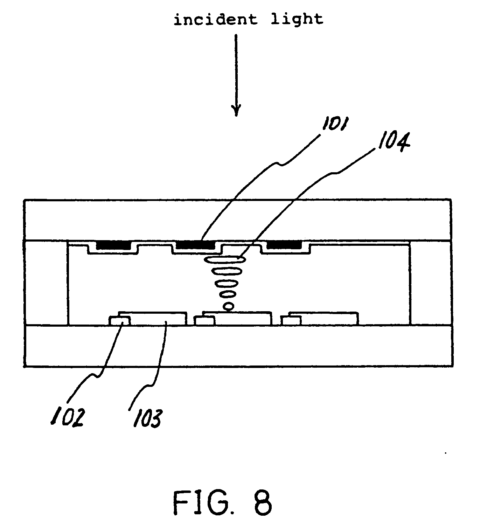

With reference to Figs. 8 to 11 and 4, a third embodiment of the present invention will be described next.

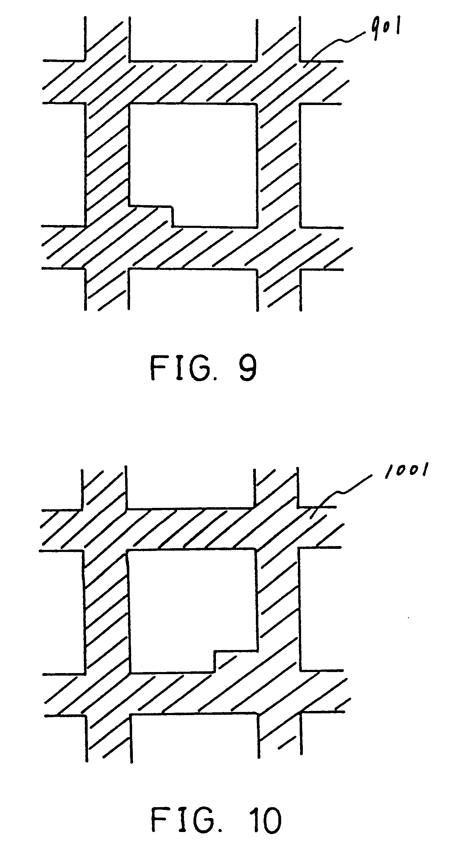

As shown in the cross-sectional view in Fig. 8, active switching elements 102 such as polysilicon thin film transistors or amorphous silicon thin film transistors, and picture element electrodes 103 are formed in a matrix on a transparent substrate as means for controlling the photoelectric effect. On the other substrate a light shield layer 101 such as a coloring layer or a metallic thin film is provided in the form of a grid, covering the whole area except for the portions corresponding to the picture element electrodes 103. After a desired aligning treatment the above two substrates are attached together with a liquid crystal composition 104 filled therebetween. Two types of liquid crystal light valves are thus obtained, with one type having a unit pattern 901 of the light shield layer as shown in Fig. 9 and the other type having a unit pattern 1001 of the light shield layer as shown in Fig. 10. As will be appreciated from a comparison of the unit patterns 901 and 1001, they are symmetric with respect to each other, like one being mirror-inverted with respect to the other. (Fig. 1 shows the correspondence between a "unit pattern" 101a of light shield layer 101 and the arrangement of the switching elements 102). The arrangement of the active switching elements 102 of the two types of liquid crystal light valves is correspondingly symmetric so that in each type the active switching elements are completely shielded by the light shield layer.

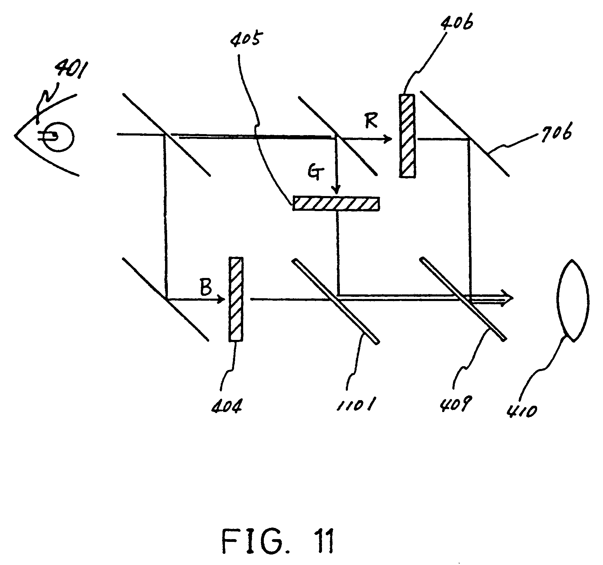

The light enters the liquid crystal light valve from the side of the light shield layer 101, and the type of liquid crystal light valves corresponding to Fig. 9 can be used as the green light liquid crystal light valve 405 when the type corresponding to Fig. 10 is used for the red and the blue light liquid crystal light valves 404 and 406, or vice versa, if the projection-type color display device is constructed according to Fig. 4 or Fig. 11.

According to the construction shown in Fig. 4, the red and the blue images are each reflected once by the red light reflection dichroic mirror surface 408 and the blue light reflection dichroic mirror surface 409, respectively, before they are guided to the projection lens 410. On the other hand, the green image enters the projection lens 410 without being reflected. Therefore, the red and the blue image are projected as mirror-inverted images, whereas the green image is projected as non-inverted image. Since the patterns of the light shield layers of the liquid crystal light valves forming the red and the blue image are symmetric with respect to the pattern of the light shield layer of the liquid crystal light valve forming the green image, after having been mirror-inverted, the patterns of the red and the blue images are fully coincident with that of the green image in the synthesized projected image. As a result, no irregular color is caused in the picture elements.

According to the construction shown in Fig. 11, a red image is formed by the red light liquid crystal light valve 406 and is then guided to the projection lens 410 through a double reflection by mirror 706 and red light reflection dichroic mirror surface 409. A green image is formed by the green light liquid crystal light valve 405 and is guided to the projection lens 410 through one reflection by the green light reflection dichroic mirror surface 1101. A blue image is formed by the blue light liquid crystal light valve 404 and is guided to the projection lens 410 without reflection. Therefore, the red image and the blue image are projected without positional transformation, whereas the green image is projected as a mirror image of the original one. In this embodiment, the patterns of the light shield layers of the red light and the blue light liquid crystal light valves and the pattern of the light shield layer of the green light liquid crystal light valve are symmetric with respect to each other as explained above, so that the patterns of the light shield layer are completely coincident in the projected image.

As stated above, the projection-tpye color display device of this embodiment produces a projection image having a faithful color reproducibility without any irregular color in the picture elements. The optical construction of the projection-type display device according to Figs. 4 and 11 shall be interpreted as illustrative and not in a limiting sense. The explained symmetric relation between the unit patterns of the light shield layers of the liquid crystal light valves for forming colored images which are subjected to an odd number of reflections and those of the light shield layers of the liquid crystal light valves for forming colored images which are subjected to an even number of reflections achieves the object of the present invention easily.

As explained with respect to the first and second embodiments of the present invention, the symmetric relation between the aligning distributions of the liquid crystals avoids irregular color in the projected image as a whole. As explained with respect to the third embodiment of the invention, the symmetric relation between the patterns of the light shield layers and the arrangement of the active switching elements avoids irregular color in the picture elements. If these embodiments are combined to have both, the symmetric relation between the aligning distributions and the symmetric relation between the patterns of the light shield layers, irregular color in the picture elements and in the whole picture are avoided. For instance, when in the third embodiment the green light liquid crystal light valve 405 uses a TN liquid crystal twisted clockwise as shown in Fig. 2 and the red and the blue light liquid crystal light valves 406 and 404 use a TN liquid crystal twisted counterclockwise as shown in Fig. 3, a projected image being excellent in color reproducibility without irregular color in the whole picture can be obtained in the same manner as in the above embodiments 1 and 2.

A fourth embodiment of the invention will be described with reference to Figs. 4, 8 and 11 to 13.

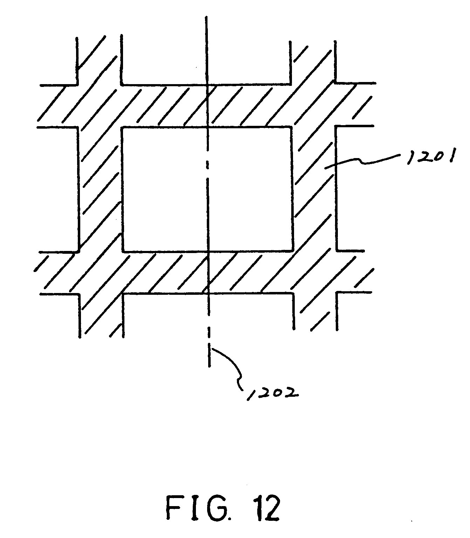

Fig. 8 is a cross-sectional view of the liquid crystal light valve of the projection-type color display device of this fourth embodiment and Fig. 12 shows the unit pattern of the light shield layer 101 of the liquid crystal light valve. Figs. 4 and 11 show the optical construction of the projection-type color display device of the this embodiment. The liquid crystal light valve constructed in accordance with Fig. 8 is provided with a unit pattern 1201 of the light shield layer shown in Fig. 12 which is axially symmetric with respect to a vertical center line 1202. The projection-type display device uses three liquid crystal light valves in accordance with the construction similar to that shown in Figs. 4 and 11. Each of the three liquid crystal light valves has a light shield layer pattern according to the unit pattern 1201 of Fig. 12. In this embodiment, the aligning distribution of the green light liquid crystal light valve 405 and the aligning distributions of the red light liquid crystal light valve 406 and the blue light liquid crystal light valve 404 are symmetric with respect to each other in the sense explained before and a TN liquid crystal twisted by an angle of 80° in the counterclockwise direction and a TN liquid crystal twisted by an angle of 80° in the clockwise direction are employed in the light valves, respectively. Since one of the unit patterns of the light shield layer of the liquid crystal light valve for the red light, the green light or the blue light is the mirror image of the other two and since these patterns are axially symmetric with respect to the vertical center axes, the patterns are completely coincident with original forms if they are laterally inverted. Therefore, even of the unit pattern is laterally inverted several times, the unit pattern is not changed and the picture element patterns in each of the colored images formed by the three liquid crystal light valves are completely coincident in the projected image, which results in no irregular color. That means that the same light shield layer pattern can be used for the three liquid crystal light valves, so that the same production process can be used for forming the light shield layers for the three liquid crystal light valves. A photolithographic technique is generally employed for the production of light shield layers. According to this embodiment only one photo-mask or the like is necessary, rendering the production process simple and allowing the liquid crystal light valves to be produced at low cost.

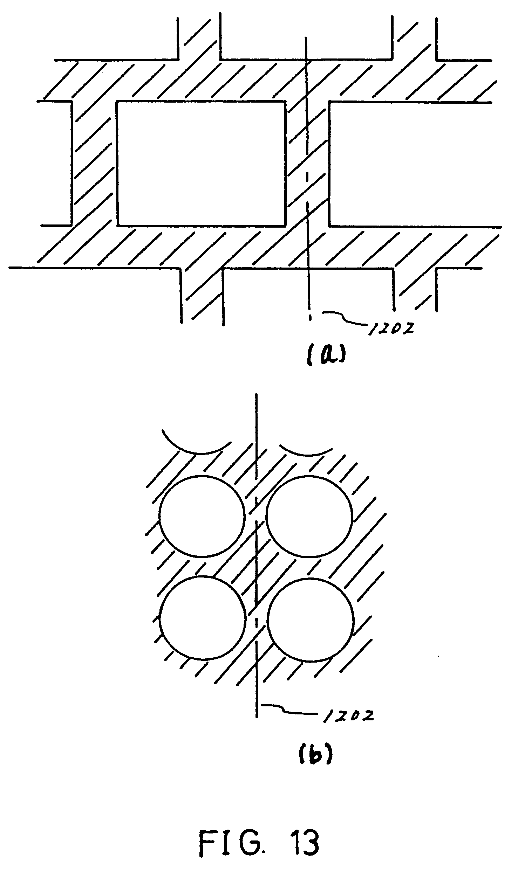

The unit pattern of the light shield layer of this embodiment is not limited to the one shown in Fig. 12, but any pattern which is axially symmetric with respect to the vertical center axes, for example the one shown in Fig. 13, may be used. Further, if the picture elements are arranged triangularly, the object of the present invention can be achieved easily.

It goes without saying that the fourth embodiment, like the third embodiment, may be combined with the first or second embodiment in order to avoid irregular color due to the angle of incidence dependency of the photoelectricity of the liquid crystal light valves in order to achieve an even more excellent color reproducibility.

## Claims

1. A projection-type color display device comprising liquid crystal light valves for controlling a plurality of colored light beams and producing respective color images, an optical synthesizing system (407) for optically synthesizing said color images, and a projection lens system (410) for projecting the synthesized images onto a screen,
   characterized in that an optical characteristic of each liquid crystal light valve forming a color image which is guided to said projection lens system (410) through an even number of reflections and the corresponding optical characteristic of each liquid crystal light valve for forming a color image which is guided to the projection lens system through an odd number of reflections have a mirror-inverted like symmetric relation with respect to each other,
   wherein the optical characteristic of said liquid crystal light valves is the liquid crystal aligning distribution.

2. A projection-type color display device comprising liquid crystal light valves for controlling a plurality of colored light beams and producing respective color images, an optical synthesizing system (407) for optically synthesizing said color images, and a projection lens system (410) for projecting the synthesized images onto a screen,
   characterized in that an optical characteristic of each liquid crystal light valve forming a color image which is guided to said projection lens system (410) through an even number of reflections and the corresponding optical characteristic of each liquid crystal light valve for forming a color image which is guided to the projection lens system through an odd number of reflections have a mirror-inverted like symmetric relation with respect to each other,
   wherein the optical characteristic of said liquid crystal light valves is the form of a unit pattern (901, 1001) of a light shield layer (101) formed in the liquid crystal valve.

3. A display device according to claim 2, wherein the form of the unit pattern (1201) of a light shield layer (101) of the liquid crystal light valve is axially symmetric with respect to a center axis in the vertical direction of the unit pattern.

4. A projection-type color display device comprising liquid crystal light valves for controlling a plurality of colored light beams and producing respective color images, an optical synthesizing system (407) for optically synthesizing said color images, and a projection lens system (410) for projecting the synthesized images onto a screen,
   characterized in that an optical characteristic of each liquid crystal light valve forming a color image which is guided to said projection lens system (410) through an even number of reflections and the corresponding optical characteristic of each liquid crystal light valve for forming a color image which is guided to the projection lens system through an odd number of reflections have a mirror-inverted like symmetric relation with respect to each other,
   wherein the optical characteristic is the arrangement of switching elements (102) in the liquid crystal light valves for controlling the photoelectric effect of the liquid crystal.

5. A display device according to claim 1, wherein further optical characteristics of each liquid crystal light valve forming a color image which is guided to said projection lens system (410) through an even number of reflections and the corresponding optical characteristics in each liquid crystal light valve for forming a color image which is guided to the projection lens system through an odd number of reflections have a mirror-inverted like symmetric relation with respect to each other, said further optical characteristics being the form of a unit pattern of a light shield layer formed in the liquid crystal light valve, and the arrangement of switching elements formed in the liquid crystal light valves for controlling the photoelectric effect of the liquid crystal.

6. A display device according to claim 2, wherein a further optical characteristic of each liquid crystal light valve forming a color image which is guided to said projection lens system (410) through an even number of reflections and the corresponding optical characteristics in each liquid crystal light valve for forming a color image which is guided to the projection lens system through an odd number of reflections have a mirror-inverted like symmetric relation with respect to each other, said further optical characteristic being the arrangement of switching elements formed in the liquid crystal light valves for controlling the photoelectric effect of the liquid crystal.

## Patentansprüche

1. Projektionsfarbanzeigeeinrichtung umfassend Flüssigkristallichtventile zur Steuerung einer Vielzahl von Farblichtstrahlen und zur Erzeugung jeweiliger Farbbilder, ein optisches Synthesesystem (407) zum optischen Zusammenfügen der Farbbilder, und ein Projektionslinsensystem (410) zum Projizieren der zusammengesetzten Bilder auf einen Schirm,

   dadurch **gekennzeichnet,** daß eine optische Eigenschaft jedes Flüssigkristallichtventils, das ein Farbbild erzeugt, welches über eine gerade Anzahl von Reflexionen zu dem Projektionslinsensystem (410) geführt wird, und die entsprechende optische Eigenschaft jedes Flüssigkristallichtventils zur Ausbildung eines Farbbilds, das über eine ungerade Anzahl von Reflexionen zu dem Projektionslinsensystem geführt wird, eine spiegelverkehrt-artige symmetrische Beziehung zueinander haben,

   wobei die optische Eigenschaft der Flüssigkristallichtventile die Flüssigkristall-Ausrichtungsverteilung ist.

2. Projektionsfarbanzeigeeinrichtung umfassend Flüssigkristallichtventile zur Steuerung einer Vielzahl von Farblichtstrahlen und zur Erzeugung jeweiliger Farbbilder, ein optisches Synthesesystem (407) zum optischen Zusammenfügen der Farbbilder, und ein Projektionslinsensystem (410) zum Projizieren der zusammengesetzten Bilder auf einen Schirm,

   dadurch **gekennzeichnet** daß eine optische Eigenschaft jedes Flüssigkristallichtventils, das ein Farbbild erzeugt, welches über eine gerade Anzahl von Reflexionen zu dem Projektionslinsensystem (410) geführt wird, und die entsprechende optische Eigenschaft jedes Flüssigkristallichtventils zur Ausbildung eines Farbbilds, das über eine ungerade Anzahl von Reflexionen zu dem Projektionslinsensystem geführt wird, eine spiegelverkehrt-artige symmetrische Beziehung zueinander haben,

   wobei die optische Eigenschaft der Flüssigkristallichtventile die Form eines Einheitsmusters (901, 1001) einer in dem Flüssigkristallventil ausgebildeten Lichtabschirmschicht (101) ist.

3. Anzeigevorrichtung nach Anspruch 2, bei der die Form des Einheitsmusters (1201) einer Lichtabschirmschicht (101) des Flüssigkristallichtventils axialsymmetrisch in bezug auf eine Mittelachse in Vertikalrichtung des Einheitsmusters ist.

4. Projektionsfarbanzeigeeinrichtung umfassend Flüssigkristallichtventile zur Steuerung einer Vielzahl von Farblichtstrahlen und zur Erzeugung jeweiliger Farbbilder, ein optisches Synthesesystem (407) zum optischen Zusammenfügen der Farbbilder, und ein Projektionslinsensystem (410) zum Projizieren der zusammengesetzten Bilder auf einen Schirm,

   dadurch **gekennzeichnet,** daß eine optische Eigenschaft jedes Flüssigkristallichtventils, das ein Farbbild erzeugt, welches über eine gerade Anzahl von Reflexionen zu dem Projektionslinsensystem (410) geführt wird, und die entsprechende optische Eigenschaft jedes Flüssigkristalllichtventils zur Ausbildung eines Farbbilds, das über eine ungerade Anzahl von Reflexionen zu dem Projektionslinsensystem geführt wird, eine spiegelverkehrt-artige symmetrische Beziehung zueinander haben,

   wobei die optische Eigenschaft die Anordnung von Schaltelementen (102) in dem Flüssigkristallichtventil zur Steuerung des photoelektrischen Effekts des Flüssigkristalls ist.

5. Anzeigeeinrichtung nach Anspruch 1, bei der weitere optische Eigenschaften jedes Flüssigkristallichtventils, das ein Farbbild erzeugt, welches über eine gerade Anzahl von Reflexionen zu den Projektionslinsensystemen (410) geführt wird, und die entsprechenden optischen Eigenschaften in jedem Flüssigkristallichtventil zur Ausbildung eines Farbbildes, das über eine ungerade Anzahl von Reflexionen zu dem Projektionslinsensystem geführt wird, eine spiegelverkehrt-artige symmetrische Beziehung zueinander aufweisen, wobei die weiteren optischen Eigenschaften die Form eines Einheitsmusters einer in dem Flüssigkristallichtventil ausgebildeten Lichtabschirmschicht und die Anordnung von in den Flüssigkristalllichtventilen ausgebildeten Schaltelementen zur Steuerung des photoelektrischen Effekts des Flüssigkristalls sind.

6. Anzeigeeinrichtung nach Anspruch 2, bei der eine weitere optische Eigenschaft jedes Flüssigkristallichtventils, das ein Farbbild erzeugt, welches über eine gerade Anzahl von Reflexionen zu den Projektionslinsensystemen (410) geführt wird, und die entsprechenden optischen Eigenschaften in jedem Flüssigkristallichtventil zur Ausbildung eines Farbbildes, das über eine ungerade Anzahl von Reflexionen zu dem Projektionslinsensystem geführt wird, eine spiegelverkehrtartige symmetrische Beziehung zueinander aufweisen, wobei die weitere optische Eigenschaft die Anordnung von in den Flüssigkristallichtventilen ausgebildeten Schaltelementen zur Steuerung des photoelektrischen Effekts des Flüssigkristalls ist.

**Revendications**

1. Un dispositif de visualisation en couleur du type projection, comportant des structures de transmission sélective de lumière à cristaux liquides pour commander un ensemble de faisceaux de lumière colorée et pour produire des images en couleur respectives, un système de synthèse optique (407) destiné à effectuer une synthèse optique des images en couleur, et un système de lentille de projection (410) qui est destiné à projeter les images synthétisées sur un écran,

caractérisé en ce qu'une caractéristique optique de chaque structure de transmission sélective de lumière à cristaux liquides formant une image en couleur qui est guidée vers le système de lentille de projection (410) en subissant un nombre pair de réflexions, et la caractéristique optique correspondante de chaque structure de transmission sélective de lumière à cristaux liquides qui est destinée à former une image en couleur qui est guidée vers le système de lentille de projection en subissant un nombre impair de réflexions, présentent une relation mutuelle de symétrie semblable à l'inversion qui résulte de la réflexion sur un miroir,

et la caractéristique optique des structures de transmissions élective de lumière à cristaux liquides est la distribution d'alignement des cristaux liquides.

2. Un dispositif de visualisation en couleur du type projection, comportant des structures de transmission sélective de lumière à cristaux liquides pour commander un ensemble de faisceaux de lumière colorée et pour produire des images en couleur respectives, un système de synthèse optique (407) destiné à effectuer une synthèse optique des images en couleur, et un système de lentille de projection (410) qui est destiné à projeter les images synthétisées sur un écran,

caractérisé en ce qu'une caractéristique optique de chaque structure de transmission sélective de lumière à cristaux liquides formant une image en couleur qui est guidée vers le système de lentille de projection (410) en subissant un nombre pair de réflexions, et la caractéristique optique correspondante de chaque structure de transmission sélective de lumière à cristaux liquides qui est destinée à former une image en couleur qui est guidée vers le système de lentille de projection en subissant un nombre impair de réflexions, présentent une relation mutuelle de symétrie semblable à l'inversion qui résulte de la réflexion sur un miroir,

et en ce que la caractéristique optique des structures de transmission sélective de lumière à cristaux liquides est la forme d'un motif élémentaire (901, 1001) d'une couche d'écran vis-à-vis de la lumière (101) qui est formée dans la structure de transmission sélective de lumière à cristaux liquides.

3. Un dispositif de visualisation selon la revendication 2, dans lequel la forme du motif élémentaire (1201) d'une couche d'écran vis-à-vis de la lumière (101) de la structure de transmission sélective de lumière à cristaux liquides, présente une symétrie axiale par rapport à un axe central orienté dans la direction verticale du motif élémentaire.

4. Un dispositif de visualisation en couleur du type projection, comportant des structures de transmission sélective de lumière à cristaux liquides pour commander un ensemble de faisceaux de lumière colorée et pour produire des images en couleur respectives, un système de synthèse optique (407) destiné à effectuer une synthèse optique des images en couleur, et un système de lentille de projection (410) qui est destiné à projeter les images synthétisées sur un écran,

caractérisé en ce qu'une caractéristique optique de chaque structure de transmission sélective de lumière à cristaux liquides formant une image en couleur qui est guidée vers le système de lentille de projection (410) en subissant un nombre pair de réflexions, et la caractéristique optique correspondante de chaque structure de transmission sélective de lumière à cristaux liquides qui est destinée à former une image en couleur qui est guidée vers le système de lentille de projection en subissant un nombre impair de réflexions, présentent une relation mutuelle de symétrie semblable à l'inversion qui résulte de la réflexion sur un miroir,

et en ce que la caractéristique optique est la disposition d'éléments de commutation (102) dans les structures de transmission sélective de lumière à cristaux liquides, pour la commande des propriétés photoélectriques des cristaux liquides.

5. Un dispositif de visualisation selon la revendication 1, dans lequel des caractéristiques optiques supplémentaires de chaque structure de transmission sélective de lumière à cristaux liquides formant une image en couleur qui est guidée vers le système de lentille de projection (410) en subissant un nombre pair de réflexions, et les caractéristiques optiques correspondantes dans chaque structure de transmission sélective de lumière à cristaux liquides pour la formation d'une image en couleur qui est guidée vers le système de lentille de projection en subissant un nombre impair de réflexions, présentent une relation mutuelle de symétrie semblable à l'inversion qui résulte de la réflexion sur un miroir, ces caractéristiques optiques supplémentaires étant la forme d'un motif élémentaire d'une couche d'écran vis-à-vis de la lumière qui est formée dans la structure de transmission sélective de lumière à cristaux liquides, et la disposition d'éléments de commutation qui sont formés dans les structures de transmission sélective de lumière à cristaux liquides, pour commander les propriétés photoélectriques des cristaux liquides.

6. Un dispositif de visualisation selon la revendication 2, dans lequel une caractéristique optique supplémentaire de chaque structure de transmission sélective de lumière à cristaux liquides formant une image en couleur qui est guidée vers le système de lentille de projection (410) en subissant un nombre pair de réflexions, et la caractéristique optique correspondante dans chaque structure de transmission sélective de lumière à cristaux liquides pour la formation d'une image en couleur qui est guidée vers le système de lentille de projection en subissant un nombre impair de réflexions, présentent une relation mutuelle de symétrie semblable à l'inversion qui résulte de la réflexion sur un miroir, cette caractéristique optique supplémentaire étant la disposition d'éléments de commutation qui sont formés dans les structures de transmission de lumière à cristaux liquides pour commander les propriétés photoélectriques des cristaux liquides.

incident light

101a    101

102

103

FIG. 1

FIG. 2

FIG. 3

FIG. 4

luminous
intensity

light valve position
viewing from left to right

# FIG. 5

luminous
intensity

light valve position
viewing from left to right

# FIG. 6

FIG. 7

incident light

FIG. 8

FIG. 9

FIG. 10

FIG. 11

FIG. 12

(a)

(b)

FIG. 13